Europäisches Patentamt

European Patent Office

Office européen des brevets

(11) Veröffentlichungsnummer: **0 307 903 B1**

# (12) EUROPÄISCHE PATENTSCHRIFT

(45) Veröffentlichungstag der Patentschrift: **29.01.92**

(51) Int. Cl.⁵: **B23B 31/14**

(21) Anmeldenummer: **88115095.7**

(22) Anmeldetag: **14.09.88**

(54) **Vorrichtung für schnelle und automatische rotierende Sperrung eines Werkzeughalters in einem Rotationskörper in seiner festen Verbindung z. B. mit einer Werkzeugmaschine oder Fräsmaschine.**

(30) Priorität: **16.09.87 IT 2192487**

(43) Veröffentlichungstag der Anmeldung:
**22.03.89 Patentblatt 89/12**

(45) Bekanntmachung des Hinweises auf die
Patenterteilung:
**29.01.92 Patentblatt 92/05**

(84) Benannte Vertragsstaaten:
**AT CH DE FR LI**

(56) Entgegenhaltungen:
**GB-A- 1 345 386
US-A- 2 367 863
US-A- 3 672 256
US-A- 3 709 508
US-A- 3 837 661**

**PATENT ABSTRACTS OF JAPAN, Band 6, Nr. 14 (M-108)(892), 27. Januar 1982; & JP - A - 56 134109 (KOUSOKU DENKI)**

(73) Patentinhaber: **Sotriffer, Hans Ulrich
Via Bolzano, 8
I-39044 Egna (Bolzano)(IT)**

(72) Erfinder: **Sotriffer, Hans Ulrich
Via Bolzano, 8
I-39044 Egna (Bolzano)(IT)**

(74) Vertreter: **Müller, Gerd et al
Patentanwälte HEMMERICH-MÜLLER-GROSSE-POLLMEIER-MEY-VALENTIN Hammerstrasse 2
W-5900 Siegen 1(DE)**

EP 0 307 903 B1

# Beschreibung

Die Erfindung bezieht sich auf eine Kombination einer mit hohen Drehzahlen rotierbaren Spindel einer Werkzeugmaschine und einem damit verbindbaren Werkzeughalter, wobei zum schnellen und automatischen Sperren des Werkzeughalters in einer sich in axialer Richtung in der Spindel erstreckende Ausnehmung zwei oder mehr diametral gegenüberliegend angeordnete Gewichte vorgesehen sind, die bei Rotation infolge der dann auftretenden Zentrifugalkraft mit Schrägen gegen ringförmige Gegenschrägen gleicher Neigung gedrückt werden.

Eine derartige Kombination ist durch die US-A-36 72 256 bekannt. Dabei sind die Gewichte als vier begrenzt elastische Finger eines in der Ausnehmung der Spindel angeordneten rotationssymmetrischen Körpers ausgebildet. Am freien Ende eines jeden Trägers befindet sich eine Schrägfläche. Eine entsprechende Gegenfläche ist am kupplungsseitigen Ende des Werkzeughalter angearbeitet. Beim Einschieben des Werkzeughalters in die Ausnehmung der Spindel werden die Finger etwas einwärts gebogen, bis die Schrägen an den Gegenschrägen anliegen.

Bei Rotation der Spindel werden die Schrägen an den Fingern durch die Zentrifugalkraft fest gegen die Gegenschrägen des Werkzeughalters gedrückt. Der Werkzeughalter ist auf diese Weise in der Spindelausnehmung fixiert.

Die bekannte Konstruktion ist relativ aufwendig in der Herstellung.

Das trifft insbesondere auf den rotationssymmetrischen Körper zu, an dem die Finger durch Kreuzschlitzung ausgebildet sind. Außerdem ist dieser Körper Bestandteil der Spindel. Er muß deshalb mit der Spindel verbunden werden. Das geschieht dadurch, daß er mit Preßsitz in die Spindelausnehmung eingebracht wird.

Die erfindungsgemäße Lösung zielt auf eine einfache Konstruktion und auf eine bessere Sicherung des Werkzeughalter in der Kupplungsposition ab.

Es wird deshalb vorgeschlagen, daß als Gewichte in Radialbohrungen im Werkzeughalter verschiebbar angeordnete Kolben vorgesehen sind, die Schrägen als Abfasung am äußeren Ende eines jeden Kolbens ausgeführt sind und die ringförmige Gegenschräge in der Ausnehmung der Spindel ausgebildet ist.

Als vorteilhaft hat sich erwiesen, daß die Kolben mit ihren inneren Enden mit einem im Werkzeughalter angeordneten elastischen Element verklebt sind, welches den Kolben eine bestimmte Axialbewegung in den Radialbohrungen erlaubt. Sobald die Spindel mit Werkzeughalter zum Stillstand kommt, werden die Kolben durch das elastische Element in ihre Ausgangslage zurückgezogen. Der Werkzeughalter kann von der Spindel getrennt werden.

Um die Kolben in ihrer Lage zu sichern, ist es zweckmäßig, daß das elastische Element Kreuzform aufweist und mit seinen freien Armen in einer Axialbohrung des Werkzeughalter angeordnet ist.

Um den Werkzeughalter beim Einstecken in die Ausnehmung der Spindel in eine exakte Position zu bringen, weisen die Spindel an ihrem freien Ende und der Werkzeughalter radiale Ringflächen auf, die bei angekuppeltem Werkzeughalter gegeneinanderliegen. Die Anordnung der Ringflächen erlaubt es auch, optisch festzustellen, ob der Werkzeughalter sich in Kuppelposition befindet.

Weitere Merkmale der Erfindung resultieren aus der nachstehenden Beschreibung eines Ausführungsbeispiels der Vorrichtung gemäß der Erfindung unter Bezugnahme auf die anliegende Zeichnung.

Die Vorrichtung besteht aus dem mit der Maschine fest verbundenen Rotationskörper 1 und dem Werkzeughalter 2, der im Körper 1 zu blockieren ist.

Der Körper 1 hat eine Ausnehmung mit einem ersten zylindrischen Abschnitt, einem zweiten Abschnitt mit konischer Aufweitung und einem dritten ringförmigen Abschnitt und ein sich nach innen erstreckendes ringförmiges Ende.

Der Werkzeughalter 2 hat einen ersten zylindrischen Abschnitt, einen zweiten konisch aufweitenden Abschnitt und einen dritten zylindrischen Abschnitt sowie einen sich in Richtung nach außen erstreckenden ringförmigen Abschnitt.

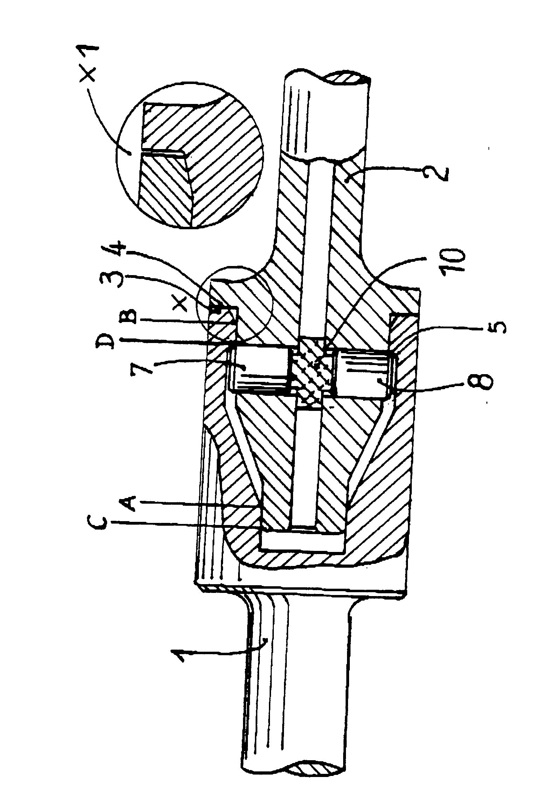

Aus der Zeichnung geht klar und deutlich hervor, daß der Werkzeughalter 2 radial mit seinem ersten zylindrischen Abschnitt im ersten zylindrischen Abschnitt des Körpers 1 und darüber hinaus mit seinem zylindrischen Endabschnitt im ringförmigen Abschnitt des Körpers lgeführt wird.

Die vorderen Enden 3, 4, eines gegen das andere gerichtet, des ringförmigen Abschnitts des Körpers 1 und des Werkzeughalters 2 bestimmen die Kupplungshöhe des Werkzeughalters 2 im Körper 1.

Im zylindrischen Abschnitt des Werkzeughalters sind zwei oder mehr einander radial entgegengesetzte zylindrische Ausnehmungen vorgesehen, in jeder derselben befindet sich eingebaut und radial beweglich ein Kolben 7, 8 mit abgeschrägtem äußeren Kopf. Die beiden Kolben 7, 8 sind mit ihren inneren Enden an ein kreuzförmiges Element 10 geklebt, das aus stark elastischem Material gefertigt ist.

Der auf diese Weise konstruierte Werkzeughalter 2 kann in den Körper 1 eingerückt werden, weil das elastische Element 10 zuläßt, daß zunächst die Kolben 7, 8 sich in Richtung nach innen zurückziehen, um die interne ringförmige Oberfläche des Endabschnitts zu überwinden, der in das Innere des Körpers 1 ragt, und dann die beiden Kolben radial mit ihren Abschrägungen des Kopfes gegen die Abschrägung des ringförmigen Abschnitts des Körpers 1 nach außen zu stoßen, so daß bei stillstehender Maschine des Werkzeughalters 2, wenn er vertikal montiert ist, nicht aus dem Körper 1 herausziehbar ist.

Die Kreuzform des elastischen Elements verhindert, daß die Kolben herausfallen, wenn der Werkzeughalter nicht montiert ist.

Bei drehendem Körper 1 werden die Kolben 7, 8 durch Zentrifugalkraft nach außen gedrückt und mit ihren Köpfen gegen die innere ringförmige Oberfläche des Körpers 1 gepreßt. Außerdem werden sie mit ihrer Abschrägung des Kopfes gegen die Abschrägung 5 des mit ihnen identischen Winkels des ringförmigen Vorsprungs des Körpers 1 gepreßt.

Auf diese Weise wird der Werkzeughalter 2 sicher, schnell und automatisch in der Drehung am Körper 1 gesperrt und außerdem werden die beiden Teile 1, 2 axial einer gegen den anderen mit ihren Oberflächen 3, 4 gepreßt, wodurch eine genaue Höhe des Teils 2 im Teil 1 gewährleistet wird.

Die gleichen Abstände A-B und C-D sind von erheblicher Bedeutung, weil es anderenfalls nicht gelingen würde, den Teil 2 in den Teil 1 und umgekehrt einzubringen.

Bei einem hohen Druck auf die Schneidkante des Werkzeugs oder auch bei einer niedrigen Zahl von Umdrehungen des Werkzeugs kann die Gefahr des Gleitens des Teils 2 im Teil 1 eintreten. Diese Gefahr kann ohne weiteres vermieden werden, z.B. durch symmetrisches Modulieren der Aufweitung 54 des ringförmigen Abschnitts des Körpers 1, d.h. mit einer konischen Verbindung laut Darstellung im Kreis X 1 im Bild, die etwa 10° betregen muß, wodurch der Teil 2 sich leicht im Teil 1 drehbewegen kann.

Es versteht sich, daß die Oberflächen der Führungen sowohl radial als auch axial, und ebenso des kooperierenden Abschrägungen und die Kolben mit großer Genauigkeit bearbeitet und aus geeignetem Material gefertigt sein müssen.

Der Werkzeughalter 2 wird leicht und schnell in dem Körper 1 gekuppelt und die Sperrung sowohl radial als auch axial zwischen den beiden Teilen erfolgt schnell und automatisch, im Unterschied zu den bekannten Vorrichtungen, die eine Sperrbetätigung mit Handbetrieb erfordern.

## Patentansprüche

1. Kombination aus einer mit hohen Drehzahlen rotierbaren Spindel (1) einer Werkzeugmaschine und einem damit verbindbaren Werkzeughalter (2), wobei zum schnellen und automatischen Sperren des Werkzeughalters (2) in einer sich in axialer Richtung in der Spindel (1) erstreckenden Ausnehmung zwei oder mehr diametral gegenüberliegend angeordnete Gewichte vorgesehen sind, die bei Rotation infolge der dann auftretenden Zentrifugalkraft mit Schrägen gegen ringförmige Gegenschrägen (5) gleicher Neigung gedrückt werden,
**dadurch gekennzeichnet,**
daß als Gewichte in Radialbohrungen im Werkzeughalter (2) verschiebbar angeordnete Kolben (7, 8) vorgesehen sind, die Schrägen als Abfasung am äußeren Ende eines jeden Kolbens (7, 8) ausgebildet sind und die ringförmige Gegenschräge (5) in der Ausnehmung der Spindel (1) ausgebildet ist.

2. Kombination nach Anspruch 1,
**dadurch gekennzeichnet,**
daß die Kolben (7, 8) mit ihren inneren Enden mit einem im Werkzeughalter (2) angeordneten elastischen Element (10) verklebt sind, welches den Kolben (7, 8) eine bestimmte Axialbewegung in den Radialbohrungen erlaubt.

3. Kombination nach Anspruch 2,
**dadurch gekennzeichnet,**
daß das elastische Element (10) Kreuzform aufweist und mit seinen freien Armen in einer Axialbohrung des Werkzeughalters (2) angeordnet ist.

4. Kombination nach mindestens einem der Ansprüche 1 bis 3,
**dadurch gekennzeichnet,**
daß die Spindel (1) an ihrem freien Ende und der Werkzeughalter (2) radiale Ringflächen (3, 4) aufweisen, die bei angekuppeltem Werkzeughalter (2) gegeneinanderliegen.

## Claims

1. A combination of a machine tool spindle (1) rotatable at high r.p.m.
and a toolholder (2) which may be connected to it, in which for quick automatic locking of the toolholder (2) into a recess extending into the spindle in the axial direction two or more weights are provided, which are arranged diametrically opposite one another and in rotation because of the centrifugal force then arising become forced by bevels against annular counterbevels (5) of the same pitch,
**characterized in that**
pistons (7, 8) are provided as weights, arranged to be able to slide in radial bores in the toolholder (2), and the bevels are made as chamfering at the outer end of each piston (7, 8) and the annular counterbevel (5) is made in the recess in the spindle (1).

2. A combination as in Claim 1,
   **characterized in that**
   the pistons (7, 8) are glued by their inner ends to an elastic member (10) which is arranged in the toolholder (2) and allows the pistons (7, 8) a certain axial movement in the radial bores.

3. A combination as in Claim 2,
   **characterized in that**
   the elastic member (10) exhibits the shape of a cross and is arranged with its free arms in an axial bore in the toolholder (2).

4. A combination as in at least one of the Claims 1 to 3,
   **characterized in that**
   the spindle (1) at its free end and the toolholder (2) exhibit radial annular faces (3, 4) which with the toolholder (2) coupled rest against one another.

**Revendications**

1. Dispositif qui est constitué par l'association de la broche (1) d'une machine-outil à grande vitesse de rotation et d'un porte-outil (2) pouvant être relié à la machine et dans lequel le blocage rapide et automatique du porte-outil (2) dans un évidement ménagé dans la broche et orienté dans le sens axial est assuré par deux ou plus de deux poids diamétralement opposés qui, pendant la rotation, sous l'action de la force centrifuge, sont poussés au niveau de surfaces obliques contre des surfaces obliques opposées annulaires (5) de même inclinaison, caractérisé en ce que les poids en question sont des pistons (7, 8) montés de manière à pouvoir se déplacer dans des alésages ménagés dans le sens radial dans le porte-outil (2), que les surfaces obliques sont des parties chanfreinées à l'extrémité extérieure de chacun des piston (7, 8) et que la partie opposée annulaire (5) est réalisée dans l'évidement de la broche (1).

2. Dispositif selon la revendication 1, caractérisé en ce qu'à leurs extrémités intérieures les pistons (7, 8) sont reliés par collage par un élément élastique (10) qui est placé dans le porte-outil (2) et permet un déplacement axial déterminé des pistons (7, 8) dans des alésage orientés dans le sens radial.

3. Dispositif selon la revendication 2, caractérisé en ce que l'élément élastique (10) a une forme en croix et que ses bras libres sont engagés dans un alésage axial du porte-outil.

4. Dispositif selon l'une au moins des revendications 1 à 3, caractérisé en ce que la broche (1) à son extrémité libre et le porte-outil (2) comportent des surfaces annulaires radiales (3, 4) qui s'appliquent les unes contre les autres lorsque le porte-outil (2) est accouplé.